# EUROPÄISCHE PATENTSCHRIFT

(11) **EP 0 514 380 B1**
(45) Veröffentlichungstag und Bekanntmachung des Hinweises auf die Patenterteilung: **08.03.1995**
(21) Anmeldenummer: 91901278.1
(22) Anmeldetag: 06.12.1990
(51) Int. Cl.: H01Q 1/32, H04B 7/08

(54) **ANTENNENKOMBINATION**
ANTENNA COMBINATION
COMBINAISON D'ANTENNES

(30) Priorität: 05.02.1990 DE 4003385
(43) Veröffentlichungstag der Anmeldung: 25.11.1992
(73) Patentinhaber: RICHARD HIRSCHMANN GMBH & CO., 73726 Esslingen (DE)
(72) Erfinder: SCHENKYR, Dieter, D-7312 Kirchheim (DE); BUCK, Walter, D-7000 Stuttgart (DE)
(74) Vertreter: Geyer, Ulrich F., Dr. Dipl.-Phys.
(86) Internationale Anmeldenummer: EP9002114
(87) Internationale Veröffentlichungsnummer: WO9111830

(56) Entgegenhaltungen:
- EP-A- 0 325 946
- DE-A- 3 621 117
- DE-U- 8 901 792
- FUNKSCHAU. vol. 49, no. 16, Juli 1977, MUNCHEN DE Seiten 40 - 44; Lindenmeierund Meinke: "UKW-Rundfunkempfang im Auto" siehe Seite 40, mittlere Spalte,Zeile 1 - Seite 41, linke Spalte, Zeile 64

## Beschreibung

Die Erfindung betrifft eine Antennenkombination gemäß dem Oberbegriff des Anspruchs 1.

Antennenkombinationen sind allgemein bekannt und beispielsweise in dem Buch Meindke-Gundlach "Taschenbuch für Hochfrequenztechnik", 3. Auflage 1968, Seite 496 beschrieben. Sie wirken als eine einzige Antenne und weisen gegenüber Einzelantennen einen höheren Gewinn und ein verändertes Richtdiagramm mit Ausblendung in bestimmten Richtungen auf.

Die Anwendung von Antennenkombinationen ist nicht immer möglich oder zufriedenstellen. Insbesondere dann, wenn Antennen dieser Art in beweglichen Einrichtungen, etwa in Fahrzeugen verwendet werden, sind sie als passive Anordnungen, wenn überhaupt, nur in Sonderfällen einsetzbar. Der Grund hierfür liegt darin, daß derartige Antennenkombinationen, die zur Gewinnerhöhung vorgesehen sind, Ausblendungen vornehmen. In Zusammenhang mit mobilen Einrichtungen, wie Fahrzeugen, muß jedoch auch ein Empfang bei beliebiger Ausrichtung des Fahrzeugs zur Sendestelle möglich sein. Es ist zwar grundsätzlich möglich, die Empfangskeulen in derartigen Fällen elektronisch nachzuführen. Der schaltungstechnische Aufwand hierfür ist jedoch sehr groß und in vielen Fällen nicht vertretbar.

Für die konstruktive Gestaltung von Antennen an Fahrzeugen gelten besondere Voraussetzungen und Regeln, die meist die optimale Antennendimensionierung hinsichtlich des Wirkungsgrads und des Gewinns verhindern. Die heute noch am weitesten verbreitete Stabantenne hat zwar einem guten Wirkungsgrad, ist aber wegen der Anfälligkeit gegen Korrosion und Beschädigungen, sowie wegen des erhöhten Luftwiderstandes berechtiger Kritik ausgesetzt.

Alternative, in die Karosserie integrierte Antennen, beispielsweise Heckscheiben-, Rückspiegel- oder Stoßstangenantennen, weisen insbesondere auch wegen des geringen Abstands zum Karosserieblech nur einen geringen Wirkungsgrad auf. Dies führt zu spürbaren Einbußen in der Empfangsqualität, die zwar durch die Verwendung von aktiver Antennen etwas verbessert werden kann, was jedoch wiederum mit hohem Schaltungstechnischem Aufwand verbunden ist. In jedem Falle ist jedoch ein Sendebetrieb mit derartigen Antennen im allgemeinen unmöglich.

Aus der DE 8 901 792 U1 sind zwei separate Einzelantennen bekannt, die in einem Stoßfänger installiert sind. Die Empfangssignale der Einzelantennen werden in einem Kombinationsempfänger derart addiert, daß sich eine die Empfangsqualität steigernde Richtwirkung der Antennenanordnung ergibt. Die Addition der Empfangssignale der beiden Antennen in einem Kombinationsempfänger dient also zur Vergrößerung der Richtwirkung im Summendiagramm, so daß sich eine neue Gruppencharakteristik ergibt. Die Empfangsqualität wird dabei durch die Vergrößerung der Richtwirkung erreicht.

Aus der Druckschrift Funkschau 177, Heft 16, Seiten 40/714 bis 44/718 ist es bekannt, daß sich auf elektrisch leitenden Gebilden, z. B. auf metallenen Autokarosserien resonante Ströme ausbilden. Aus dieser Druckschrift ist weiterhin bekannt, daß es vorteilhaft ist, eine Stabantenne sinnvollerweise an Karosseriestellen, etwa an Kotflügeln anzubringen, an denen Feldlinienverdichtungen auftreten, damit der Wirkungsgrad der Antennen erhöht wird.

Der Erfindung liegt die Aufgabe zugrunde, eine Antennenkombination zu schaffen, die einen hohen Antennenwirkungsgrad aufweist und nicht auf den Fahrgastraum koppelt.

Ausgehend von einer Antennenkombination mit einer Antennenanordnung und einem elektrisch leitenden Gebilde, auf dem sich ein im wesentlichen resonanter Oberflächenstromkreis ausbildet, wird die gestellte Aufgabe erfindungsgemäß dadurch gelöst, daß die Antennenanordnung aus wenigstens zwei Einzelantennen besteht, die an den Verschiebungsstrom desselben Oberflächenstromkreises koppeln, dessen Resonanzfrequenz im wesentlichen einer Frequenz im Frequenzband eines Sende- und/oder Empfangssignals entspricht, und daß die Signale der Einzelantennen über eine Umwegleitung addiert werden.

Auf metallischen Gebilden, wie der Autokarosserie oder Teilen derselben, aber auch auf Metallbeschlägen von Flachdächern, auf Eisenmasten, Tanks usw., sind Antennen immer nur ein Teil der gesamten, für den Empfang oder die Abstrahlung wirksamen Gesamtanordnung. Trifft eine Welle auf das elektrisch leitende Gebilde, etwa die Fahrzeugoberfläche oder eine sonstige elektrisch leitende Struktur, bilden sich dort von der Wellenlänge und dem Einfallswinkel abhängige Strombelegungen, sowie ein an das Fahrzeug oder die Struktur des metallischen Gebildes gebundenes elektrisches Feld aus.

Durch Resonanzeffekte können Ströme und Felder örtlich erheblich verstärkt werden.

Bei Stromresonanzen schließt sich der Oberflächenstrom über den dielektrischen Verschiebungsstrom zu einem Stromkreis. An den Enden des in Stromresonanz befindlichen, elektrisch leitendem Gebildes tritt dieser Strom aus und führt an diesen Stellen zu einer elektrischen Feldstärke. In diesem Zusammenhang wird zur Verbesserung des Wirkungsgrads der Antennenkombination die Tatsache erfindungsgemäß ausgenutzt, daß der an einem Endbereich eintretende Verschiebungsstrom wegen der Stromresonanz dem gleichen Stromkreis wie der auf dem anderen Endbereich austretende Strom zugehört.

Durch das erfindungsgemäße Merkmal, die Einzelantennen als Teil wenigstens eines auf einem elektrisch leitenden Gebilde auftretenden, im wesentlichen resonanten Stromkreises anzuordnen, ergeben sich sehr gute Antennenwirkungsgrade so daß etwa im Zusammenhang mit Fahrzeugantennen die Wirkungsgrade von Stabantennen erreicht und übertroffen werden. Das Richtdiagramm wird dadurch nur unwesentlich beeinflußt.

Die erfindungsgemäße Antennenkombination ist - wie gesagt - nicht nur für Fahrzeuge, sondern generell im Zusammenhang mit allen metallischen Gebilden, z. B. Flachdächern mit Metallbeschlag, Eisenmasten, Tanks usw., geeignet. Bekanntermaßen können Metallflächen durch resonante Oberflächenströme das Diagramm einer in der Nähe befindlichen Antenne erheblich verändern oder verfälschen. In derartigen Fällen ist es daher möglich, die Oberflächenströme entsprechend dem erfindungsgemäßen Prinzip als Antenne zu nutzen, da auf diese Weise etwa ein gleichmäßiges Richtdiagramm erreicht werden kann. Vorzugsweise bei rauhen und extremen Umweltbedingungen, sowie bei Überspannungsgefahren ist es vorteilhaft, die erfindungsgemäße Antennenkombination einzusetzen.

Die erfindungsgemäßen Merkmale haben insbesondere dann große Vorteile, wenn die Einzelantennen verkürzte Antennen sind.

Insbesondere bei Stoßstangen-, Scheiben- und Rückspiegelantennen ist es im Gegensatz zu Stabantennen nicht möglich, auch nur anähernd eine optimale Antennenlänge, die etwa einer Viertelwellenlänge der zu empfangenden oder sendenden Strahlung entspricht, zu schaffen, vor allem auch deshalb, weil derartige integrierte Antennen nicht weit genug vom Karosserieblech entfernt sind. Gerade bei derartigen integrierten Antennen ist daher der mit den erfindungsgemäßen Merkmalen erzielte Effekt und Vorteil besonders hoch.

Gemäß einer bevorzugten Ausführungsform der Erfindung entspricht die Resonanzfrequenz und/oder ein ungerades Vielfaches derselben im wesentlichen einer Frequenz im Frequenzband eines Sende- und/oder Empfangssignals. Die Anordnung der Einzelantennen und/oder die Auswahl und Gestaltung der elektrisch leitenden Gebilde zur Herbeiführung dieser bevorzugten Ausführungsform ermöglicht eine weitere Optimierung der Sende- und/oder Empfangseigenschaften der erfindungsgemäßen Antennenkombination.

Resonanzfähige Gebilde besitzen mit der Frequenz periodisch wiederkehrende Eigenschaften. Die erfindungsgemäße Antennenkombination ist daher durch geeignet gewählte Anordnungen bzw. einen geeignet gewählten Aufbau auch für mehrere, durch eine Frequenzlücke getrennte Frequenzbereiche empfindlich. Die erfindungsgemäße Antennenkombination eignet sich daher auch für eine Mehrfachnutzung wie beispielsweise im Zusammenhang mit Antennenkombinationen für Fahrzeuge sowohl für den Radioempfang als auch für den Mobilfunk oder jede andere Funkanwendung.

Eine vorteilhafte Ausführungsform besteht darin, daß die Antennenkombination für mehrere, durch jeweils eine Frequenzlücke getrennte Empfangsbereiche eingesetzt ist. Ohne weiteren Aufwand ist es daher möglich, mit derselben Antennenkombination den Empfang oder das Senden von Signalen in unterschiedlichen Empfangs-/Sendebereichen durchzuführen.

Vorteilhaft ist es, wenn wenigstens zwei zueinander beabstandete Einzelantennen in einer horizontalen Ebene, beispielsweise in einer Stoßstange, an den Kanten eines Fahrzeugdachs, eines Kofferraumdeckels oder einer Motorhaube angeordnet sind. Eine Antennenkombination dieser Art ist für den Empfang besonders geeignet, da die von Rundfunksendern abgestrahlten Wellen im wesentlichen horizontal polarisiert sind. Beim Empfang oder Senden von Signalen, deren Wellen in vertikaler Richtung polarisiert sind, wie dies beispielsweise beim Mobilfunk üblich ist, ist es von Vorteil, wenn wenigtens zwei in senkrechter Richtung zueinander beabstandete Einzelantennen vorgesehen sind. Die Einzelantennen können beispielsweise Antennengebilde in Form isolierter Zierleisten sein.

Besonders vorteilhaft ist es, wenn wenigstens zwei Einzelantennen in einem Abstand von im wesentlichen der halben Resonanz-Wellenlänge angeordnet sind.

Gemäß einer besonders vorteilhaften Ausführungsform der Erfindung sind die einzelnen Antennen an Kanten des elektrisch leitenden Gebildes vorgesehen.

Bekanntermaßen ist das elektrische Feld an Kanten verstärkt, so daß auch bei der herkömmlichen Anwendung von Stabantennen an Karosseseriekanten ein besonders guter Antennenwirkungsgrad auftritt. Das gleichzeitige Vorliegen des Kanteneffekts, d. h. des Vorhandenseins einer starken Feldstärkenkonzentration an Kanten, und einer Stromresonanz ergibt besonders gute Wirkungsgrade der erfindungsgemäßen Antennenkombination. Im Zusammenhang mit Fahrzeugantennen trifft dies für den 3-Meter-Wellenbereich, also etwa für den UKW-Rundfunkempfang zu, wenn beispielsweise Stoßstangen-Antennenkombinationen verwendet werden, bei denen die Einzelantennen an den Ecken der Stoßstangen vorgesehen sind. Da die Breite eines Fahrzeugs, insbesondere eines Personenwagens, im Bereich von 1,5 m liegt, ist Stromresonanz gegeben. Die Wirkungsgrade derartiger Antennenkombinatione liegen im Bereich herkömmlicher Stabantennen, ohne daß deren Nachteile in Kauf genommen werden müssen.

Die erfindungsgemäße Antennenkombination ist allgemein, insbesondere aber auch im Zusammenhang mit Fahrzeugen und in besonders vorteilhafter Weise dann einsetzbar, wenn das elektrisch leitende Gebilde Teil einer Fahrzeugkarosserie und die einzelnen Antennen Fahrzeugantennen ist bzw. sind. Entsprechend der bereits erwähnten Ausrührumgsform der Erfindung, wonach wenigstens zwei Einzelantennen in einem Abstand von im wesentlichen der halben Resonanzwellenlänge angeordnet sind, können die Einzelantennen der erfindungsgemäßen Antennenkombinations an zwei beliebigen voneinander entfernten Stellen des Fahrzeugs angebracht werden, die jeweils um etwa die halbe Resonanzwellenlänge beabstandet sind. Besonders vorteilhaft ist es, wenn wenigstens zwei Einzelantennen an den Ecken bzw. Kanten einer Stoßstange, eines Fahrzeugdachs, eines Kofferraumdeckels und/oder einer Motorhaube angeordnet sind. Auf diese Weise ist zusätzlich zur Stromresonanz auch der Kanteneffekt ausnutzbar. Die λ/2-Bedingung für die Stromresonanz braucht dabei jedoch nur grob eingehalten zu werden, um ausreichende Antennenwirkungsgrade zu erzielen. Allgemein muß die mechanisch meßbare Resonatorlänge nicht der elektrischen entsprechen.

Gemäß einer sehr vorteilhaften Ausführungsform der Erfindung werden die Ausgangssignale der Einzelantennen im wesentlichen gegenphasig addiert. Die Addition der Ausgangssignale erfolgt in bekannter Weise durch herkömmliche aktive Schaltungsanordnungen oder sonstige Addierer.

Vorteilhafterweise werden die Einzelantennen über eine Umwegleitung, vorzugsweise λ/2-Umwegleitung verbunden und dadurch die Antennensignale gegenphasig addiert. Die Leistungsentnahme kann im Fußpunkt einer der beiden Teilantennen erfolgen.

Wegen der gegenphasigen Einspeisung der Antennensignale in die λ/2-Leitung wirkt diese außerhalb der Bandmittenfrequenz wie ein Parallel-Resonanzkreis, der den Antennenfußpunkten parallel liegt. Der Parallel-Resonanzkreis ist in vorteilhafter Weise zur Kompensation der Blindkomponenten von Empfangsantennen mit Serienkreisverhalten verwendbar, wenn der Wellenwiderstand geeignet gewählt ist.

Besonders vorteilhaft ist es, wenn die Umwegleitung eine Beschaltung, die für Gleich- und/oder Gegentaktsignale wirkt, aufweist. Insbesondere dann, wenn die Umwegleitung, vorzugsweise die λ/2-Umwegleitung etwa auf Grund der gewählten oder möglichen Abstände der Einzelantennen voneinander, oder im Hinblick auf die zu empfangenden oder zu sendenden Frequenzen, von der halben Wellenlänge der Signale abweicht, kann die Kombinationswirkung durch eine geeignete Gleich- und/oder Gegentaktbeschaltung, wie sie an sich bekannt ist, erhalten oder verbessert werden.

Eine weitere Ausgestaltung der Erfindung besteht in der Parallelschaltung von wenigstens zwei Einzelantennen für tiefe Frequenzen. Dies ist insbesondere bei tiefen Frequenzen von Vorteil, die kleiner als 10% der Betriebsfrequenz sind, da die λ/2-Umwegleitung ihre phasendrehende Wirkung verliert. Durch die Parallelschaltung ergibt sich für einen tieferen Frequenzbereich eine optimale Antennenwirkung, so daß eine UKW-Antenne beispielsweise auch für den Empfang von Lang-, Mittel- und Kurzwellensendern nutzbar ist.

Eine Verbesserung des Antennenwirkungsgrads ergibt sich dann, wenn die an sich erforderlichen Masseverbindungen für die Einzelantennen selektiv ausgeführt sind. Diese Maßnahme ist insbesondere für einen höheren Frequenzbereich vorteilhaft, da in diesem Falle störende Kabelkapazitäten reduziert und die Effizienz bei niederen Frequenzen verbessert wird.

Vorteilhafterweise sind n Einzelantennen vorgesehen, deren Signale zu m Antennenkombinationen kombiniert, vorzugsweise addiert werden wobei n/2 < m ≦ n ist. Prinzipiell ist es möglich, aus jeder Mehrantennenanordnung mit n Einzelantennen ebensoviele Kombinationsantennen zu bilden, die beispielweise für ein Diversityverfahren verwendbar sind.

Eine besonders vorteilhafte Ausführungsform der erfindungsgemäßen Antennenkombinationen besteht darin, daß die Einzelantennen Teil einer Diversity-Antennenkombination sind. Vorteilhaft ist es insbesondere auch, wenn die Einzelantennen und/oder die Antennenkombinationen Teil eines Antennenauswahl-Diversitysystems sind.

Wenigstens eine der Einzelantennen ist vorteilhafterweise für wenigstens zwei Zweiergruppierungen vorgesehen. Das bedeutet, daß durch die gleichzeitige Verwendung einer Teilantenne in mehreren Zweiergruppierungen eine größere Anzahl an Diversity-Eingangssignalen ohne eine entsprechende Erhöhung der Einzelantennenzahl möglich ist. Die gleichzeitige Verwendung einer Teilantenne in mehreren Zweiergruppen ist insbesondere dann von Vorteil, wenn die Einzelantennen jeweils verschiedenen resonanten Stromkreisen angehören. In diesem Falle ist es nicht mehr zwingend, daß die Teilantennen-Ausgangssignale gegenphasig addiert werden.

Wenigstens eine der Einzelantennen kann auch eine Stab-, Scheiben- und/oder Spiegelantenne sein. Die miteinander kombinierten Einzelantennen müssen nämlich nicht von gleicher Art sein. Insbesondere gegenüber einer Scheibenantenne als Einzelantenne hat dies Vorteile, da der Stromkreis sich nicht über den Fahrzeuginnenraum schließt, und somit eine unerwünschte Einkopplung auf den Fahrgastraum vermieden werden kann. Dies gilt verstärkt bei Sendebetrieb.

Besonders vorteilhaft ist es, wenn mehr als zwei Einzelantennen durch einen mit komplexen Faktoren gewichteter Addierer für die Einzelantennenausgangsignale zu einer Antenne kombiniert werden. Wie nachfolgend anhand eines Ausführungsbeispiels im einzelnen erläutert wird, ist dadurch der Zugriff auf resonante Ströme mit höherer Modenzahl möglich.

Die Erfindung wird nachstehend anhand von Ausführungsbeispielen unter Bezugnahme auf die Figuren erläutert. Es zeigen:
- Fig. 1: ein Ausführungsbeispiel des erfindüngsgemäßen Antennensystems in Schematischer Anordnung und
- Fig. 2: eine weitere Ausführungsform der Erfindung.

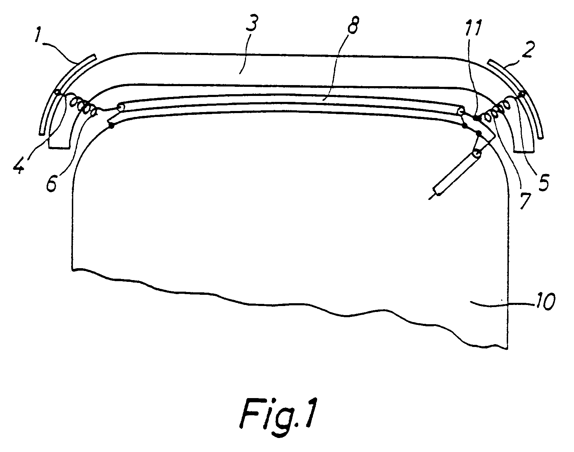

Fig. 1 zeigt zwei Einzelantennen 1 und 2, die an den Kanten einer aus nicht leitendem Material bestehende Fahrzeugstoßstange 3 in einem Abstand zueinander vorgesehen sind, der etwa der Breite des Fahrzeugs entspricht. Etwa in der Mitte der horizontalen Enden der Einzelantennen 1 und 2 ist jeweils eine Niederführung 4 und 5 und gegebenenfalls je eine Verlängerungsspule 6 und 7 vorgesehen. Die Niederführungen 4 und 5 bzw. die Verlängerunsspulen 6 und 7 sind mit den den Einzelantennen 1 und 2 abgewandten Enden mit dem jeweiligen Ende einer λ/2-Umwegleitung 8 verbunden, deren Erd- bzw. Abschirmleitung mit einem angedeuteten Karosserieblech 10 verbunden ist. Das Signal des aus den beiden Einzelantennen 1 und 2 bestehenden Antennensystems wird am Fußpunkt 11 einer der beiden Einzelantennen 1 bzw. 2 abgegriffen und einer (nicht dargestellten) Empfängerschaltung zugeführt.

Bei dieser Ausführungsform ist das Karosserieblech 10 das elektrisch leitende Gebilde, auf dem sich ein resonanter Stromkreis insbesondere für die Empzangswellen ausbildet, die in einem Wellenlängenbereich in der Größenordnung von 3 m liegen, da eine Fahrzeugbreite und dadurch die Stoßstangenlänge etwa 1,5 m breit ist, was der halben Wellenlänge dieses Wellenlängenbereichs entspricht. Weiterhin hat das Anbringen der Einzelantennen 1 und 2 an den Kanten der Stoßstange 3 die Wirkung, daß gerade dort die Feldstärkenkonzentration auf Grund des Kanteneffektes besonders groß ist. Dieser Kanteneffekt in Verbindung mit der Stromresonanz ermöglicht für die erfindungsgemäße Antennenkombination dieser Ausgestaltung einen besonders guten Antennenwirkungsgrad.

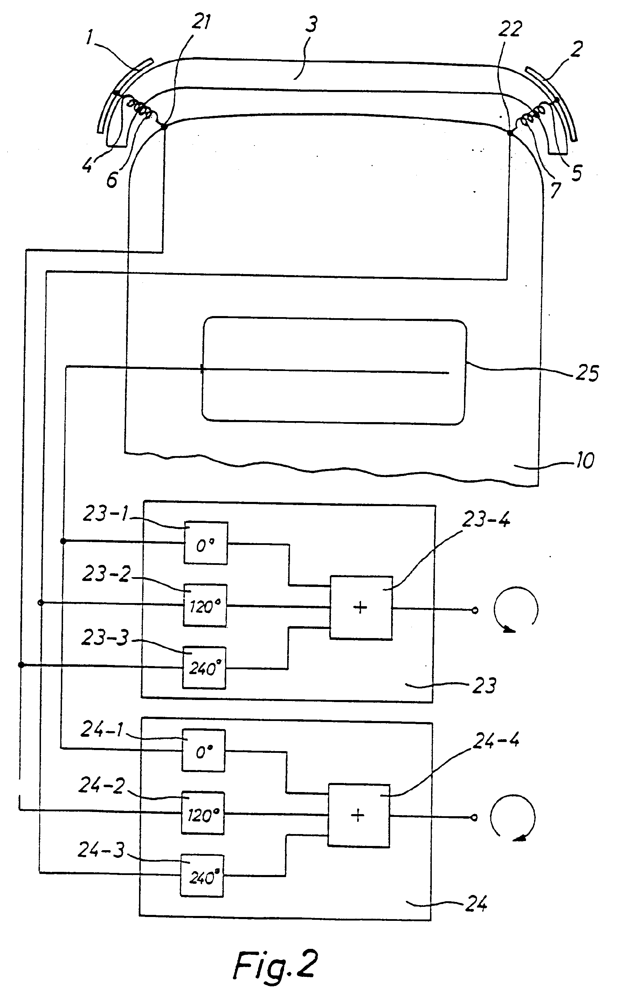

Bei der in Fig. 2 schematisch dargestellten weiteren Ausführungsform der Erfindung ist, wie in Fig. 1, der hintere Teil eines Autos von oben wiedergegeben, und Teile, die denen von Fig. 1 entsprechen, sind mit denselben Bezugszeichen versehen. Zwei an den Kanten der Stoßstange 3 angeordnete Einzelantennen 1 und 2 sind wiederum über entsprechende Niederführungen 4 und 5 bzw. Verlängerungsspulen 6 und 7 mit der Fahrzeugkarrosserie 10 verbunden. Die Ausgangssignale der Einzelantennen 1 und 2 werden an den Antennenfußpunkten 21, 22 abgegriffen und jeweils einer Antennensignal-Verarbeitungsschaltung 23 und 24 zugeführt. Weiterhin ist eine Scheibenantenne 25 vorgesehen, die in der Heckscheibe 26 angeordnet ist. Die Scheibenantenne 25 ist ebenfalls jeweils mit der Antennensignal-Verarbeitungsschaltung 23 und 24 verbunden.

Das am Antennenfußpunkt 21 abgegriffene Ausgangssignal der Antenne 1 wird einerseits einem 240°- Phasenschieber 23-1 der einen Antennensignal-Verarbeitungsschaltung 23 und andererseits einem 120°-Phasenschieber 24-1 der anderen Antennensignal-Verarbeitunssschaltung 24 zugeleitet, wogegen der Antennenfußpunkt 22 der anderen Einzelantenne 2 der Stoßstange 3 mit einem 120°-Phasenschieber 23-2 der einen Antennensignal-Verarbeitungsschaltung 23 und mit einem 240°-Phasenschieber 24-3 der anderen Antennensignal-Verarbeitungsschaltung 24 verbunden ist. Schließlich werden die Ausgangssignale der Scheibenantenne 25 jeweils direkt der Antennensignal-Verarbeitungsschaltungen 23 und 24 zugeleitet. Die Ausgangssignale der jeweiligen Phasenschieber 23-1, 23-2 und 23-3 bzw. 24-1, 24-2 und 24-3 werden jeweils einer Addierschaltung 23-4 bzw. 24-4 der Antennensignal-Verarbeitungsschaltung 23 bzw. 24 bereitgestellt. Wie am Ausgang der Antennensignal-Verarbeitungsschaltungen 23 und 24 angedeutet ist, sind die beiden Stoßstangen-Eizelantennen 1 und 2 und die Scheibenantenne 25 also so zusammengeschaltet, daß auf dem Kofferraumdeckel der links- und rechtsdrehende Modus eines Ringstroms angeregt wird. Für ein Diversity-System sind daher zwei Antennenkombinationen mit unterschiedlichem Richtdiagramm vorhanden.

Die vorliegende Erfindung wurde anhand bevorzugter Ausführungsbeispiele erläutert. Beispielsweise können im Zusammenhang mit der in Fig. 2 dargestellten Ausführungsform jedoch auch mehr als zwei oder drei Antennen eingesetzt und mit Hilfe von entsprechenden, auf dem zu empfangenden Modus dimensionierten Addierschaltungen zusammengeschaltet werden, um auf elektrisch leitenden Gebilden, wie beispielsweise dem Kofferraumdeckel oder der Motorhaube Drehfelder und Ringströme unterschiedlichster Form anzuregen. Prinzipiell können aus jeder Mehrantennenanordnung mit n Einzelantennen ebenso viele Kombinationsantennen gebildet und für ein Diversity-Verfahren ausgenützt werden.

## Patentansprüche

1. Antennenkombination mit einer Antennenanordnung und einem elektrisch leitenden Gebilde, auf dem sich ein im wesentlichen resonanter Oberflächenstromkreis ausbildet, dadurch
**gekennzeichnet,** daß die Antennenanordnung aus wenigstens zwei Einzelantennen (1,2) besteht, die an den Verschiebungsstrom desselben Oberflächenstromkreises koppeln, dessen Resonanzfrequenz im wesentlichen einer Frequenz im Frequenzband eines Sende- und/oder Empfangssignals entspricht, und daß die Signale der Einzelantennen (1,2) über eine Umwegleitung addiert werden.

2. Antennenkombination nach Anspruch 1, dadurch gekennzeichnet, daß die Resonanzfrequenz im wesentlichen einem ungeraden Vielfachen einer Frequenz im Frequenzband eines Sende- und/oder Empfangssignals entspricht.

3. Antennenkombination nach Anspruch 1 oder 2, dadurch gekennzeichnet, daß die Einzelantennen verkürzte Antennen sind.

4. Antennenkombination nach einem der vorhergehenden Ansprüche, dadurch gekennzeichnet, daß die Antennenkombination für mehrere, durch jeweils eine Frequenzlücke getrennte Empfangs- oder Sendebereiche eingesetzt ist.

5. Antennenkombination nach einem der vorhergehenden Ansprüche, dadurch gekennzeichnet, daß wenigstens zwei in einer horizontalen Ebene zueinander beabstandete Einzelantennen vorgesehen sind.

6. Antennenkombination nach einem der vorhergehenden Ansprüche, dadurch gekennzeichnet, daß wenigstens zwei in senkrechter Richtung zueinander beabstandete Einzelantennen vorgesehen sind.

7. Antennenkombination nach einem der vorhergehenden Ansprüche, dadurch gekennzeichnet, daß wenigstens zwei Einzelantennen (1, 2) in einem Abstand von im wesentlichen der halben Resonanzwellenlänge angeordnet sind.

8. Antennenkombination nach einem der vorhergehenden Ansprüche, dadurch gekennzeichnet, daß die Einzelantennen (1, 2) an Kanten des elektrisch leitenden Gebildes (3) vorgesehen sind.

9. Antennenkombination nach einem der vorhergehenden Ansprüche, dadurch gekennzeichnet, daß das elektrisch leitende Gebilde (3) Teil einer Fahrzeugkarosserie, und die Einzelantennen (1, 2) Fahrzeugantennen ist bzw. sind.

10. Antennenkombination nach einem der vorhergehenden Ansprüche, dadurch gekennzeichnet, daß zwei Einzelantennen (1, 2) an den Ecken einer Stoßstange, eines Fahrzeugdachs, eines Kofferraumdeckels und/oder einer Motorhaube angeordnet sind.

11. Antennenkombination nach einem der vorhergehenden Ansprüche, dadurch gekennzeichnet, daß wenigstens eine der Einzelantennen (1, 2) eine Stab-, Scheiben- und/oder Spiegelantenne ist.

12. Antennenkombination nach einem der vorhergehenden Ansprüche , dadurch gekennzeichnet, daß die zueinander beabstandeten Einzelantennen zwei von der Karosserie isolierte, elektrisch leitende Zierleisten sind.

13. Antennenkombination nach einem der vorhergehenden Ansprüche, dadurch gekennzeichnet, daß die Ausgangssignale der Einzelantennen (1, 2) im wesentlichen gegenphasig addiert werden.

14. Antennenkombination nach einem der vorhergehenden Ansprüche, dadurch gekennzeichnet, daß die gegenphasige Addition der Einzelantennen-Ausgangssignale durch Parallelschalten der Umwegleitung (8) erfolgt.

15. Antennenkombination nach Anspruch 14, dadurch gekennzeichnet, daß die Umwegleitung (8) eine λ/2 Umwegleitung ist.

16. Antennenkombination nach einem der Ansprüche 14 oder 15, dadurch gekennzeichnet, daß die Umwegleitung (8) als eine Koaxial- oder Parallel-Leitung ausgebildet ist.

17. Antennenkombination nach einem der vorhergehenden Ansprüche, dadurch gekennzeichnet, daß die Umwegleitung (8) eine Beschaltung, die für Gleich- und/oder Gegentaktsignale wirkt, aufweist.

18. Antennenkombination nach einem der Ansprüche 14 bis 17, dadurch gekennzeichnet, daß die Umwegleitung (8) nahe dem Karosserieblech verlegt ist.

19. Antennenkombination nach einem der vorhergehenden Ansprüche, dadurch gekennzeichnet, daß die Einzelantennen für tiefe Frequenzen parallel geschaltet sind.

20. Antennenkombination nach einem der vorhergehenden Ansprüche, dadurch gekennzeichnet, daß die Masseverbindung für die Einzelantennen selektiv ausgeführt ist.

21. Antennenkombination nach einem der vorhergehenden Ansprüche, dadurch gekennzeichnet, daß n Einzelantennen vorgesehen sind, deren Signale zu m Antennenkombinationen kombiniert werden, wobei n/2 < m ≦ n ist.

22. Antennenkombination nach einem der vorhergehenden Ansprüche, dadurch gekennzeichnet, daß die Antennenkombinationen Teil eines Diversity-Antennensystems sind.

23. Antennenkombination nach einem der vorhergehenden Ansprüche, dadurch gekennzeichnet, daß die Antennenkombinationen und/oder die Einzelantennen (1, 2) Teil eines Antennen-Auswahl-Diversitysystems sind.

24. Antennenkombination nach einem der vorhergehenden Ansprüche, dadurch gekennzeichnet, daß mehr als zwei Einzelantennen (1, 2, 25) durch einen mit komplexen Faktoren gewichteten Addierer für die Einzelantennen-Ausgangssignale zu einer Antenne kombiniert werden (Fig. 2.).

## Claims

1. Antenna combination having an antenna device and an electrically conductive formed body (3), on which a substantially resonant electrical circuit occurs, characterized in that the antenna device comprises at least two individual antennae which couple to the di-electric displacement current of the same surface current circuit, the resonance frequency of which substantially corresponds to a frequency in the frequency band of a transmitting- and/or receiving signal, and that the signals of the individual antennae (1, 2) are added via a phasing line.

2. Antenna combination according to claim 1, characterised in that the resonance frequency substantially corresponds to an uneven plurality of a frequency in the frequency band of a transmitting and/or receiving signals.

3. Antenna combination according to claim 1 or 2, characterised in that the individual antennae are shortened antennae.

4. Antenna combination according to one of the aforementioned claims, characterised in that the antennae combination is used for several receiving or transmitting ranges which are each separated by a gap in the frequency.

5. Antenna combination according to one of the aforementioned claims, characterised in that at least two individual antennae are fitted at a distance away from each other in a horizontal plane.

6. Antenna combination according to one of the aforementioned claims, characterised in that at least two individual antennae are fitted at a distance away from each other in a perpendicular direction.

7. Antenna combination according to one of the aforementioned claims, characterised in that at least two individual antennae (1,2) are disposed at a distance apart of substantially half the resonance wave length.

8. Antenna combination according to one of the aforementioned claims, characterised in that the individual antennae (1,2) are fitted on the edges of the electrically conductive formed body (3).

9. Antenna combination according to one of the aforementioned claims, characterised in that the electrically conductive body (3) is part of a vehicle chassis and the individual antennae (1,2) are vehicle antennae.

10. Antenna combination according to one of the aforementioned claims, characterised in that two individual antennae (1,2) are disposed on the corners of a bumper, of a vehicle roof, of a boot lid and/or an engine bonnet.

11. Antenna combination according to one of the aforementioned claims, characterised in that at least one of the individual antennae (1,2) is a rod antenna, a windscreen antenna and/or mirror antenna.

12. Antenna combination according to one of the aforementioned claims, characterised in that the individual antennae, which are spaced at a distance from each other, are two insulated, electrically conductive chassis trims.

13. Antenna combination according to one of the aforementioned claims, characterised in that the output signals of the individual antennae (1,2) are added substantially in phase opposition.

14. Antenna combination according to one of the aforementioned claims, characterised in that the addition in phase opposition of the output signals of the individual antennae is produced by means of parallel connecting a phasing line (8).

15. Antenna combination according to claim 14, characterised in that the phasing line (8) is λ/2 phasing line.

16. Antenna combination according to one of claims 14 or 15, characterised in that the phasing line (8) is designed as a coaxial or parallel line.

17. Antenna combination according to one of the aforementioned claims, characterised in that the phasing line (8) has a wiring, which functions for common-mode signals and/or push-pull signals.

18. Antenna combination according to one of claims 14 to 17, characterised in that the phasing line (8) is displaced close to the motorcar body sheet.

19. Antenna combination according to one of the aforementioned claims, characterised in that the individual antennae are parallel connected for low frequencies.

20. Antenna combination according to one of the aforementioned claims, characterised in that the connection to earth is selectively carried out for the individual antennae.

21. Antenna combination according to one of the aforementioned claims, characterised in that n individual antennae are fitted, whose signals are combined into m antennae combinations, and n/2 <m ≦n.

22. Antenna combination according to one of the aforementioned claims, characterised in that the antenna combinations are part of a diversity antenna system.

23. Antenna combination according to one of the aforementioned claims, characterised in that the antenna combination and/or the individual antennae (1,2) are part of an antenna selection diversity system.

24. Antenna combination according to one of the aforementioned claims, characterised in that, for the output signals of the individual antennae, more than two individual antennae (1,2,25) are combined into one antenna by means of an adder weighted with complex factors. (Fig. 2).

## Revendications

1. Combinaison d'antennes comportant un ensemble d'antennes et une structure électriquement conductrice, sur laquelle se forme un circuit électrique de surface essentiellement résonant, caractérisée en ce que l'ensemble d'antennes est constitué d'au moins deux antennes individuelles (1, 2), qui se connecte au courant de déplacement de ce même circuit de surface, dont la fréquence de résonance correspond sensiblement à une fréquence dans la bande d'un signal d'émission et/ou de réception, et en ce que les signaux des antennes individuelles (1, 2) s'additionnent sur une ligne de dérivation.

2. Combinaison d'antennes selon la revendication 1, caractérisée en ce que la fréquence de résonance correspond sensiblement à un multiple impair d'une fréquence sur la bande d'un signal d'émission et/ou de réception.

3. Combinaison d'antennes selon les revendications 1 ou 2, caractérisée en ce que les antennes individuelles sont des antennes raccourcies.

4. Combinaison d'antennes selon l'une des revendications précédentes, caractérisée en ce que la combinaison d'antennes est utilisée pour plusieurs gammes de réception ou d'émission séparées chacune par un trou de fréquence.

5. Combinaison d'antennes selon l'une des revendications précédentes, caractérisée en ce qu'il est prévu au moins deux antennes individuelles espacées l'une de l'autre dans un plan horizontal.

6. Combinaison d'antennes selon l'une des revendications précédentes, caractérisée en ce qu'il est prévu au moins deux antennes individuelles espacées l'une de l'autre en direction verticale.

7. Combinaison d'antennes selon l'une des revendications précédentes, caractérisée en ce qu'au moins deux antennes individuelles (1, 2) sont espacées d'une distance correspondant sensiblement à la moitié de la longueur d'onde de résonance.

8. Combinaison d'antennes selon l'une des revendications précédentes, caractérisée en ce que les antennes individuelles (1, 2) sont prévues sur les bords de la structure (3) électriquement conductrice.

9. Combinaison d'antennes selon l'une des revendications précédentes, caractérisée en ce que la structure (3) électriquement conductrice fait partie de la carrosserie d'un véhicule et les antennes individuelles (1, 2) sont des antennes de véhicule.

10. Combinaison d'antennes selon l'une des revendications précédentes, caractérisée en ce que deux antennes individuelles (1, 2) sont placées aux angles d'un pare-chocs, d'un toit de véhicule, d'un capot de coffre à bagages et/ou d'un capot du moteur.

11. Combinaison d'antennes selon l'une des revendications précédentes, caractérisée en ce que l'une au moins des antennes individuelles (1, 2) est une antenne à barre, à disque et/ou à miroir.

12. Combinaison d'antennes selon l'une des revendications précédentes, caractérisée en ce que les antennes individuelles espacées l'une de l'autre sont deux baguettes d'enjoliveurs électriquement conductrices, isolées de la carrosserie.

13. Combinaison d'antennes selon l'une des revendications précédentes, caractérisée en ce que les signaux de sortie des antennes individuelles (1, 2) sont pour l'essentiel additionnés en opposition de phase.

14. Combinaison d'antennes selon l'une des revendications précédentes, caractérisée en ce que l'addition en opposition de phase des signaux de sortie des antennes individuelles s'effectue par montage en parallèle de la ligne de déviation (8).

15. Combinaison d'antennes selon la revendication 14, caractérisée en ce que la ligne de déviation (8) est une ligne de déviation λ/2.

16. Combinaison d'antennes selon l'une des revendications 14 ou 15, caractérisée en ce que la ligne de déviation (8) est une ligne coaxiale ou parallèle.

17. Combinaison d'antennes selon l'une des revendications précédentes, caractérisée en ce que la ligne de déviation (8) comporte un montage qui agit pour les signaux à mode commun et/ou les signaux symétriques.

18. Combinaison d'antennes selon l'une des revendications 14 à 17, caractérisée en ce que la ligne de déviation (8) est placée à proximité de la tôle de carrosserie.

19. Combinaison d'antennes selon l'une des revendications précédentes, caractérisée en ce que les antennes individuelles sont montées en parallèle pour les basses fréquences.

20. Combinaison d'antennes selon l'une des revendications précédentes, caractérisée en ce que la liaison à la masse pour les antennes individuelles est réalisée de manière sélective.

21. Combinaison d'antennes selon l'une des revendications précédentes, caractérisée en ce que n antennes individuelles sont prévues dont les signaux sont combinés en m combinaisons d'antennes n/2 < m ≦ n.

22. Combinaison d'antennes selon l'une des revendications précédentes, caractérisée en ce que les combinaisons d'antennes font partie d'un système d'antennes diversity.

23. Combinaison d'antennes selon l'une des revendications précédentes, caractérisée en ce que les combinaisons d'antennes et/ou les antennes individuelles (1, 2) font partie d'un système diversity de sélection d'antennes.

24. Combinaison d'antennes selon l'une des revendications précédentes, caractérisée en ce que plus de deux antennes individuelles (1, 2, 25) sont combinées en une antenne par un additionneur pondéré avec des facteurs complexes, pour les signaux de sortie d'antennes individuelles (fig. 2).
